Europäisches Patentamt

European Patent Office

Office européen des brevets

(19)

(11) Veröffentlichungsnummer : **0 394 719 B1**

(12) # EUROPÄISCHE PATENTSCHRIFT

(45) Veröffentlichungstag der Patentschrift :
16.09.92 Patentblatt 92/38

(51) Int. Cl.$^5$ : **F16B 25/00**

(21) Anmeldenummer : **90106455.0**

(22) Anmeldetag : **04.04.90**

(54) Gewindeformende Schraube.

(30) Priorität : **25.04.89 DE 8905189 U**

(43) Veröffentlichungstag der Anmeldung :
**31.10.90 Patentblatt 90/44**

(45) Bekanntmachung des Hinweises auf die
Patenterteilung :
**16.09.92 Patentblatt 92/38**

(84) Benannte Vertragsstaaten :
**AT BE CH DE DK ES FR GB GR IT LI LU NL SE**

(56) Entgegenhaltungen :
**DE-A- 3 335 092**

(73) Patentinhaber : **Rommel, Erwin
Ringstrasse 11
W-4320 Hattingen (DE)**

(72) Erfinder : **Dicke, Robert Ing.
Brinkerstrasse 4
W-5828 Ennepetal 13 (DE)**

(74) Vertreter : **Patentanwälte Dr. Solf & Zapf
Schlossbleiche 20 Postfach 13 01 13
W-5600 Wuppertal 1 (DE)**

EP 0 394 719 B1

## Beschreibung

Die vorliegende Erfindung betrifft eine gewindeformende Schraube mit einem sich zumindest teilweise über ihren Schraubenschaft erstreckenden ein- oder mehrgängigen Gewinde, einer Schraubenspitze und einem Schraubenkopf, wobei die den Gewindegrat bildende Kante mindestens teilweise wellenförmig auf dem bis zum Ende der Schraubenspitze verlaufenden Gewinde ausgebildet ist, wobei der wellenförmige Gewindegrat auf der Schraubenspitze und mindestens auf dem ersten sich anschließenden Gewindegang des Schraubenschaftes zumindest an ihrer der Schraubenspitze zugekehrten Flankenfläche im Abschnitt der Wellentäler des Gewindegrats die Flankenfläche unterbrechende Vertiefungen aufweist, deren obere Begrenzung die den Gewindegrat bildende Kante selbst ist.

Eine derartige Schraube ist bereits aus der deutschen Patentanmeldung 33 35 092.2 bekannt. Bei dieser bekannten Schlitzschraube sind die Vertiefungen symmetrisch zur Mittellinie der wellenförmigen Kante ausgebildet, so daß die Vertiefungen als symmetrische Paraboloide geformt sind. Diese bekannte Schlitzschraube weist gegenüber den bisher bekannten Schrauben bereits ein reduziertes Eindrehmoment und ein erhöhtes Lösemoment auf.

Der vorliegenden Erfindung liegt die Aufgabe zugrunde, diese bekannte Schraube dahingehend zu verbessern, daß eine weitere Erniedrigung des Eindrehmoments bei gleichzeitiger Erhöhung des Lösemoments erreicht wird.

Erfindungsgemäß wird dies dadurch erreicht, daß die Vertiefungen derart asymmetrisch ausgebildet sind, daß ihre in Eindrehrichtung vordere Flankenfläche steiler verläuft als die in Eindrehrichtung hintere Flankenfläche. Hierbei ist es weiterhin zweckmäßig, daß der Übergang der Vertiefungen zur Flankenfläche die Form einer Parabel hat, deren Achse zu der durch die Schraubenlängsachse verlaufenden Mittellinie der die obere Begrenzung bildenden wellenförmigen Kante um einen spitzen Winkel $\alpha$ in Eindrehrichtung verschoben ist.

Zweckmäßig ist es weiterhin, wenn die Vertiefungen einander gegenüberliegend auf beiden Flankenflächen des Gewindeganges ausgebildet sind. Aufgrund der erfindungsgemäßen Ausgestaltung ist demnach beim Einschrauben der Widerstand durch die flachere Ausführung des in Eindrehrichtung hinteren Parabolteils geringer, wohingegen das Lösen der erfindungsgemäßen Schraube aufgrund der steileren Anordnung der in Eindrehrichtung vorne liegenden Parabolfläche erschwert wird.

Anhand des in den beiliegenden Zeichnungen dargestellten Ausführungsbeispiels wird die Erfindung näher erläutert.

Es zeigen:

Fig. 1 eine Teilansicht einer erfindungsgemäßen Schraube,

Fig. 2 einen Teilschnitt entlang der Schnittlinie A-B in Fig. 1,

Fig. 3 einen Teilschnitt durch eine Vertiefung der Flankenfläche der Schraube gemäß Fig. 1 entlang der Schnittlinie C-D in Fig. 2.

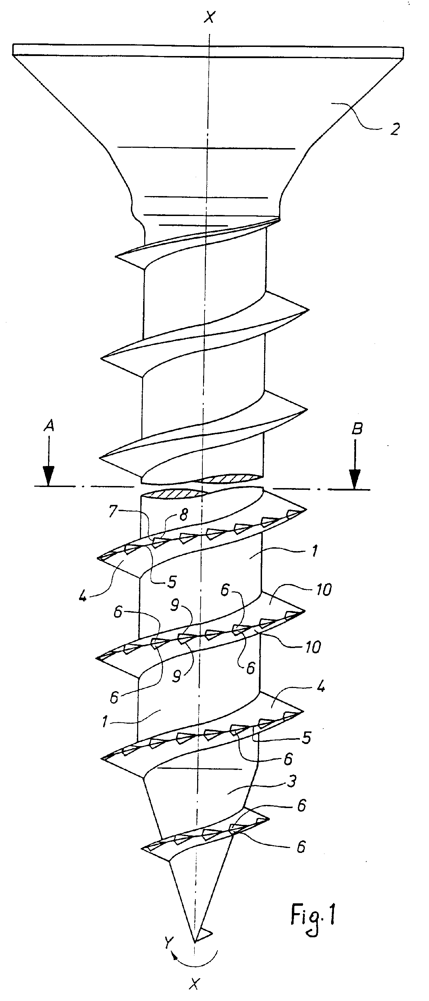

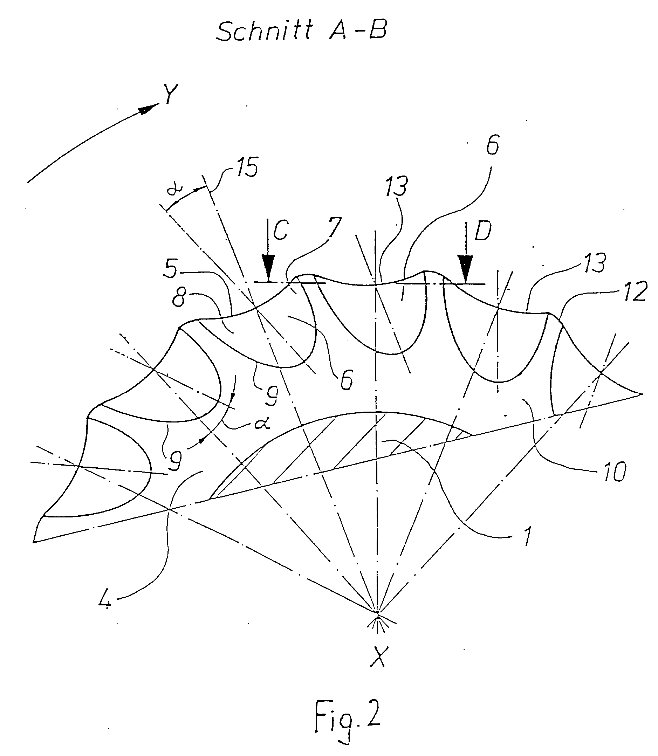

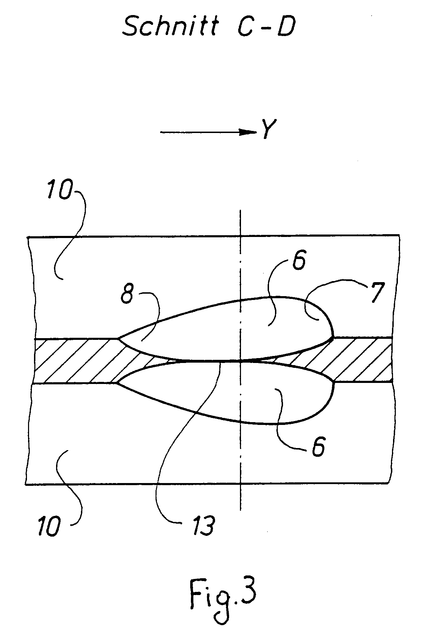

Wie sich aus Fig. 1 ergibt, besteht eine erfindungsgemäße Schraube aus einem Schraubenschaft 1, einem Schraubenkopf 2 und einem einfachen Schlitz oder Kreuzschlitz und einer Schraubenspitze 3. Der Schraubenschaft 1 weist einen über seine gesamte Länge gleichen Durchmesser auf, und die Schraubenspitze 3 verjüngt sich zum Schraubenschaft kontinuierlich bis zu ihrem Ende hin. Am Schraubenschaft 1 und an der Schraubenspitze 3 ist ein Schraubgewinde 4 ausgebildet, das bis zum Ende der Schraubenspitze 3 verläuft. Die den Gewindegrat bildende Kante 5 der das Gewinde 4 bildenden Gewindegänge verläuft wellenförmig, d. h. es ist eine stetige Folge von Erhöhungen (Wellenberge 12) und Vertiefungen (Wellentäler 13) vorhanden, wobei der Gewindeaußendurchmesser durch den Abstand der Gewindekante 5 von der Mittelachse der Schraube im Bereich der Wellenberge 12 bestimmt wird. Weiterhin sind mindestens an der der Schraubenspitze zugekehrten Flanke 10 der Gewindegänge jeweils im Bereich der Wellentäler 13 der Gewindekante 5 Vertiefungen 6 ausgebildet. Hierbei bildet die Kante 5 im Bereich des jeweiligen Wellentals 13 die obere Begrenzung der Vertiefungen 6. Wie insbesondere aus Fig. 2 in Verbindung mit Fig. 3 zu entnehmen ist, sind die Vertiefungen 6 derart asymmetrisch ausgebildet, daß ihre in Eindrehrichtung der erfindungsgemäßen Schraube weisende Flankenfläche 7 steiler ist als die in Eindrehrichtung der Schraube gesehen hintere Flankenfläche 8. Hier ist der Übergang 9 zur übrigen Flankenfläche der Gewindeflanke 10 als Parabel ausgebildet. Die Achse 4 der Parabel ist zur durch die Schraubenlängsachse X-X verlaufende Mittellinie 15 der die obere Begrenzung bildenden wellenförmigen Kante 5 um einen spitzen Winkel $\alpha$ in Eindrehrichtung verschoben. Zweckmäßigerweise ergibt sich eine Teilung der Vertiefungen über einen Gewindegang von etwa 8 bis 13 Vertiefungen 6. Hierbei können die Vertiefungen 6 im gesamten Gewindebereich, also auch auf der Schraubenspitze selbst vorhanden sein.

Die Tiefe der Vertiefungen 6 kann zweckmäßigerweise 1/3 bis 1/2 der Gewindehöhe H betragen. Wie sich aus den Figuren ergibt, ist zwischen den Vertiefungen 6 und dem übrigen Flankenbereich der Gewindeflanke ein fließender Übergang vorhanden, so daß hier keine scharfen Kanten entstehen und somit eine spanende Wirkung verhindert wird. Entsprechendes gilt auch für den Übergang zwischen den Wellentälern 13 und -bergen 12 der Kante 5, wobei die Wellentäler 13 die Begrenzung der Vertiefungen 6 bilden. Die Wellenberge 12 sind relativ kurz gegenüber den Wellentälern ausgebildet.

Im dargestellten Ausführungsbeispiel der Figur 1 sind auf beiden Flankenflächen der Gewindegänge 4 die Vertiefungen 6 einander gegenüberliegend klappsymmetrisch zur Kante 5 angeordnet. Es liegt jedoch im Rahmen der Erfindung auch jeweils nur einseitig an den Flankenflächen Vertiefungen 6 vorzusehen.

**Patentansprüche**

1. Gewindeformende Schraube mit einem sich zumindest teilweise über ihren Schraubenschaft (1) erstreckenden ein- oder mehrgängigen Gewinde (4), einer Schraubenspitze (3) und einem Schraubenkopf (2), wobei die den Gewindegrat bildende Kante (5) mindestens teilweise wellenförmig auf dem bis zum Ende der Schraubenspitze (3) verlaufenden Gewinde (4) ausgebildet ist und der wellenförmige Gewindegrat auf der Schraubenspitze (2) und mindestens auf dem ersten sich anschließenden Gewindegang des Schraubenschaftes (1) zumindest an seiner der Schraubenspitze (3) zugekehrten Flankenfläche im Abschnitt der Wellentäler (13) des Gewindegrats die Flankenfläche (7) unterbrechende Vertiefungen (6) aufweist, deren obere Begrenzung die den Gewindegrat bildende Kante (5) ist,
**dadurch gekennzeichnet,**
daß die Vertiefungen (6) derart asymmetrisch ausgebildet sind, daß ihre in Eindrehrichtung vordere Flankenfläche (7) steiler verläuft als die in Eindrehrichtung hintere Flankenfläche (8).

2. Gewindeformende Schraube nach Anspruch 1,
**dadurch gekennzeichnet**, daß der Übergang (9) der Vertiefungen (6) zur Gewindeflanke (10) die Form einer Parabel (9) hat, deren Achse (4) zur durch die Schraubenlängsachse X-X verlaufenden Mittellinie (15) der die obere Begrenzung bildenden wellenförmigen Kante (5) um einen spitzen Winkel α in Eindrehrichtung verschoben ist.

3. Gewindeformende Schraube nach Anspruch 1 oder 2,
**dadurch gekennzeichnet**, daß der Abstand der Vertiefungen (6) im Bereich der Schraubenspitze (3) zum spitzen Ende hin kleiner wird.

4. Gewindeformende Schraube nach einem oder mehreren der Ansprüche 1 bis 3,
**dadurch gekennzeichnet**, daß die Vertiefungen (6) einander gegenüberliegend auf beiden Gewindeflanken (10) des Gewindeganges (4) ausgebildet sind.

**Claims**

I. Thread-cutting screw having one or more threads (4) extending over at least part of the screw shank (I), a screw tip (3) and a screw head (2), wherein the edge (5) of the flights forming the thread border is shaped to be at least partly undulating on the threads (4) running to the end of the screw tip (3) and the undulating ridge of the thread on the screw tip (2) and at least on the first of the thread path of the screw shaft (I) at least on the side surface in the region of the valleys (I3) of the thread ridges of the side surfaces provides spaced apart recesses (6), whose upper limit forms the edge (5) of the thread ridge, <u>characterised in that</u> the recesses (6) are formed asymmetrical, such that the front side surfaces (7) in the screw-in direction are steeper than the rear side surfaces (8) in the screw-in direction.

2. Thread-cutting screw according to Claim I, <u>characterised in that</u> the transition (9) of the recesses (6) in the side faces (I0) take the form of a parabola (9), the axis (4) of which is displaced by an acute angle in the screw-in direction towards the midline (I5) of the undulating edge (5) which forms the upper limit running through the longitudinal axis X-X of the screw.

3. Thread-cutting screw according to Claim I or 2, <u>characterised in that</u> the distance between the recesses (6) becomes smaller towards the acute end in the region of the screw tip (3).

4. Thread-cutting screw according to one or more of Claims I to 3, <u>characterised in that</u> the recesses (6) extend one over another on both sides (I0) of the thread (4).

**Revendications**

1. Vis taraudante avec un filetage (4) à un ou plusieurs filets s'étendant au moins partiellement sur sa tige (1), une pointe de vis (3) et une tête de vis (2), le bord (5) formant l'arête du filetage étant au moins partiellement de forme ondulée sur le filetage (4) se prolongeant jusqu'à l'extrémité de la tête de vis (3) et l'arête de vis ondulée présentant sur la pointe de vis (2) et au moins sur le premier filet suivant la tige de vis (1) des renfoncements (6) interrompant la surface de flanc (7) au moins sur sa surface de flanc tournée vers la pointe de vis (3) dans la section des creux des ondes (13) de l'arête de vis, dont la limite supérieure est le bord (5) formant l'arête du filetage, caractérisée en ce que les renfoncements (6) sont formés asymétriquement de manière à ce que l'inclinaison de leur surface de flanc (7) avant dans le sens du vissage soit plus raide que celle de la surface de flanc (8) arrière dans le sens du vissage.

2. Vis taraudante selon la revendication 1, caractérisée en ce que la transition (9) des renfoncements (6) vers le flanc (10) du filetage est en forme de parabole (9) dont l'axe (4) est décalé d'un angle aigu dans le sens du vissage par rapport à la ligne médiane (15), qui passe par l'axe longitudinal X-X de la vis, du bord ondulé (5) formant la limite supérieure.

3. Vis taraudante selon la revendication 1 ou 2, caractérisée en ce que l'écartement entre les renfoncements (6) dans la zone de la pointe (3) diminue jusqu'à l'extrémité en pointe.

4. Vis taraudante selon l'une ou plusieurs des revendications 1 à 3, caractérisée en ce que les renfoncements (6) sont formés opposés les uns aux autres sur les deux flancs (10) du filet (4).

Fig.1

Schnitt A-B

Fig. 2

Schnitt C-D

$\longrightarrow Y$

Fig.3